# EUROPEAN PATENT SPECIFICATION

(11) **EP 2 979 232 B1**
(45) Date of publication and mention of the grant of the patent: **26.12.2018**
(21) Application number: 14774726.5
(22) Date of filing: 25.03.2014
(51) Int. Cl.: G06Q 10/06, G06Q 10/10

(54) **METHOD AND SYSTEM FOR A SCHEDULING SYSTEM**
VERFAHREN UND SYSTEM FÜR EIN PLANUNGSSYSTEM
PROCÉDÉ ET SYSTÈME DESTINÉS À UN SYSTÈME DE PLANIFICATION

(30) Priority: 27.03.2013 SE 1350396
(43) Date of publication of application: 03.02.2016
(73) Proprietor: Karlsson, Anders, 663 40 Hammarö (SE); CePro Ltd., Kowloon, Hong Kong (CN)
(72) Inventor: KARLSSON, Anders, S-663 40 Hammarö (SE)
(74) Representative: Ehrner & Delmar Patentbyrå AB
(86) International application number: PCT/SE2014/050361
(87) International publication number: WO 2014/158085

(56) References cited:
- EP-A1- 2 479 958
- WO-A1-2010/151211
- AU-A4- 2011 100 921
- US-A1- 2008 079 569
- US-A1- 2008 154 687
- US-A1- 2011 157 366
- US-A1- 2012 075 068
- US-A1- 2012 206 344
- US-A1- 2012 299 728
- 'How this court booking system works' MYCOURTS 27 January 2014, XP055288763 Retrieved from the Internet: <URL:www.mycourts.co.uk, http://parsonsgreen.mycourts.co.uk/about_Sq uash_court_booki ng_system.asp>
- 'The XML2010 Court Booking System, On-site & Online Court Booking For Squash & Tennis Clubs' PAYNE AUTOMATION 27 January 2014, XP055288765 Retrieved from the Internet: <URL:www.booksquash.com>

## Description

### Field of the invention

The present invention relates to scheduling systems, and, in particular, the present invention relates to an information display system for use with a scheduling system and in which an electronic display device is utilized for displaying scheduling information according to the preamble of claim 1.

### Background of the invention

Scheduling of resources, such as, e.g., meeting (conference) rooms, parking lots, work spaces etc. is often subject to frustration due to misunderstandings and erroneous/conflicting bookings. Still resources of this kind oftentimes stay unused even while being booked, e.g. because the booking has not been cancelled even if e.g. a meeting being the cause of the reservation has been cancelled.
Consequently, the scheduling of such resources has been subject to the development of various scheduling systems (a.k.a. booking systems), and various systems for scheduling resources exist. Examples of such systems are disclosed in AU-A-2011100921 and WO 2010/151211 A1. These systems, at least with regard to systems of the electronic kind, often have in common that reservations (bookings) are performed by the use of a computer, and the reservation of a resource is then represented, e.g., as a calendar representation in a calendar being specific to the particular resource, and which is accessible, and viewable, from computers of various users of the system.
Some scheduling systems of this kind have the disadvantage that the reservations are not displayed at the location of the particular resource being reserved, but only when accessing the scheduling system from a computer. Such systems can give rise to ambiguities with regard to whether a resource is actually reserved or not, and also give rise to undesired situations. For example, a person can enter a meeting room that is empty and therefore appears to be free for use, only to subsequently find out that in reality the party having reserved the room is just arriving late.

In view of the above, it has been found useful to utilize information display systems in connection to scheduling systems for presentation of resource usage information where it is needed the most, i.e. at the premises of the resource, such as, for example, at the entrances of meeting rooms, and systems have been developed where display devices are being located at such locations. The display devices can be connected to a scheduling system by means of a network so that scheduling information regarding the resource can be communicated over a network to be presented by the display device.

The use of network connected display devices has the advantage that if a person changes a reservation, e.g. using his/her computer, this scheduling change will immediately be reflected by the particular display device that is used to display the current reservations of the resource.

Consequently, the use of such display devices has, among other, the advantage that a person looking for an available resource immediately can see on the display whether the resource is free for use, or has already being booked. Oftentimes the display devices can also be used for instant reservation if the resource is available.

### Summary of the invention

It is an object of the present invention to provide an information display system that allows communication of further data without the requirement of software installations on a scheduling server. This object is achieved by an information display system according to appended claim 1.

According to the present invention it is provided an information display system for displaying scheduling information in regard of at least one resource in a scheduling system, said scheduling system comprising a scheduling server and wherein scheduling of said resource is controlled by said scheduling server, said information display system comprising at least one display device adapted to be, in use, associated with a first resource of said scheduling system for displaying scheduling information with regard to said first resource, said display device including means for, in use with a scheduling system, receiving and displaying scheduling information, said information display system further including a second entity, being different from said display device. The display device and said second entity are adapted for exchanging data between said display device and said second entity by means of electronic mail (e-mail) messages.
As has been mentioned above, information display systems with display devices for use in scheduling systems to display scheduling information have substantial advantages. However, it is common that scheduling/calendaring functions are integrated with the e-mail services in a dedicated scheduling server, for example, but not limited to, Microsoft Exchange servers.
This also means that, when an information display system according to the above is about to be set up, additional applications in general must be installed on the scheduling server. Although such solutions have advantages from a technical point of view, these solutions have the disadvantage that the installation of additional software that may cause malfunctions and/or other errors in the operation of the scheduling server. Such installations therefore raise concerns among system administrators due to a reluctance to unnecessarily interfere with scheduling servers, since nowadays these servers often constitute a critical part of a company's business.

Systems have been developed where scheduling server installations are not required, but this in turn imposes other restrictions in the usage of the information display system. The present invention provides a solution that allows communication of further data with display devices of the information display system without the requirement of installations on the scheduling server.

Furthermore, the present invention also has the advantage that there is no requirement of any intermediate server for relaying scheduling information between scheduling server and the display devices on order to provide possibilities for communication of further data than otherwise has been possible.

According to the present invention, this is accomplished by exchanging data between said display device and said second entity by means of electronic mail (e-mail) messages. The use of e-mail messages has the advantage that no specific installation of software is required, it is sufficient that the display device and second entity are adapted for extraction of data from e-mail messages.

The e-mail address for use in this regard can be the e-mail address of the resource that the display device, when setup for use, is arranged to display data in regard of. In this case, the display device can be adapted to poll the scheduling server for e-mail messages in the same manner as any other client polls the scheduling server, and hence without any adaption of the scheduling server. Alternatively, or in addition, the e-mail address of the display device can be an e-mail address that is different from an e-mail address of the scheduling system. For example, the e-mail address can be an e-mail address of the manufacturer/retailer/service company of the display device, so that e-mail messages can be transmitted to the display device from the "outside". This requires that the display device has an Internet connection.

Likewise, the second entity can be adapted to be an entity, being located separate from said scheduling server, but within the same network, and e.g. being provided with an e-mail address of the scheduling server. Alternatively, the second entity can be arranged to be located outside the network of the scheduling server.

The display device can be adapted to receive data by means of e-mail messages transmitted by said second entity, the data e.g. being configuration data for configuring the display device in respect of the one or more resources it is to be associated with and be displaying data in regard of, and/or software for installation in said display device, e.g. to perform an update of the firmware of the display device.

The display device can also adapted to transmit e-mail messages to said second entity, where the e-mail messages, for example, can comprise status information data regarding status of said display device, e.g. stating whether the display device is functioning properly or not. Such data can also, for example, consist of data regarding use of resources, e.g. for use in statistical analysis of resource usage.

The display device can comprise communication means for communication with said scheduling server by means of a communication protocol by means of which communication protocol the display device can be automatically authenticated by said scheduling server, so as to allow communication of scheduling information between said display device and the scheduling server independent of installation of additional software on the scheduling server. This allows the display device to obtain scheduling information in regard of the one or more resources it is to be displaying scheduling information for without any software installations on the scheduling server.

According to one embodiment, all communication with the display device is performed by means of e-mail. In this embodiment, also the scheduling information is communicated by means of e-mail messages.

The information display system according to the invention has the advantage that it can be added to an existing network architecture without the requirement of any additional software on the scheduling server, and still allow communication of any data to/from the display device.

The scheduling server is preferably a mail server.

The communication protocol that is used in communication between the information display system and the scheduling server can, for example, be a Web-based Distributed Authoring and Versioning (WebDAV) based protocol, and/or Exchange Web Services (EWS) based protocol.

Further characteristics of the present invention, and advantages thereof, will be evident from the following detailed description of preferred embodiments and appended drawings, which are given by way of example only, and are not to be construed as limiting in any way.

### Brief description of the drawings

Fig. 1 schematically shows resources for which dedicated display devices are being utilized for displaying scheduling information in an information display system.
Fig. 2 schematically shows a network architecture of an information display system and scheduling system.
Fig. 3 schematically shows a display device according to the present invention.
Fig. 4 shows an exemplary method according to the present invention.

### Detailed description of an exemplary embodiment

In the following description and claims, the term "scheduling server" is used to represent any server that is responsible for and handling reservations with regard to a resource.

Furthermore, the term "resource" is used to represent a physical resource that can be reserved for use by a user. Examples of such resources are, in a non-limiting manner, meeting (conference) rooms, parking lots, class rooms (with regard to, e.g. schools), operating rooms (with regard to hospitals), office space, exhibition rooms and so on and so forth.

As explained, efficient scheduling and use of resources can be facilitated by arranging associated display devices e.g. in the proximity of the location of the resources, such as at the entrances of the meeting rooms. The display device can be used to display relevant information regarding e.g. a meeting outside the meeting room, and automatically synchronize with a scheduling system so as to ensure that accurate data is presented on the display device.

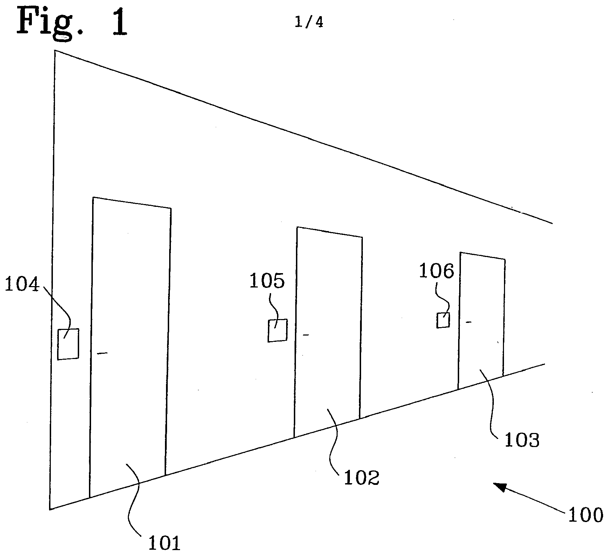

Fig. 1 shows an example of a meeting room area 100 in which the present invention can be utilized. The meeting room area comprises three meeting rooms 101-103, each being provided with an associated display device 104-106. The display devices 104-106 are used to display reservations (bookings) of the associated meeting rooms 101-103, respectively.

The display devices 104-106 are arranged to display selected meeting information outside the meeting rooms 101-103, thereby assisting participants of a meeting to properly locate the particular meeting room in which the meeting is to be held. Apart from displaying information in regard of already made reservations, the display devices can also be provided with an indicator, such as, e.g. lights (for example, red for occupied and green for unreserved) to avoid interruption of ongoing meetings, or for finding a meeting room that is free for reservation and even allow visual determination of room availability from a distance. The display devices can, e.g., be arranged to display reservations for a defined period of time, such as, e.g. the next couple of hours, a full day, all days of the week, etc., and also be arranged to display further data such as the name/identity of the person responsible for the reservation, and/or participants and/or subject of the meeting.

The display devices can be individually configurable, and thereby be arranged to display the same kind/set of information, or individualized information. The display devices can provide further functionality and e.g. allow reservation of an available resource or extend and/or delete an existing reservation when the meeting schedule is changed. The display devices can also be arranged to allow reservations of other resources than the resource(s) that the particular display device is associated with.

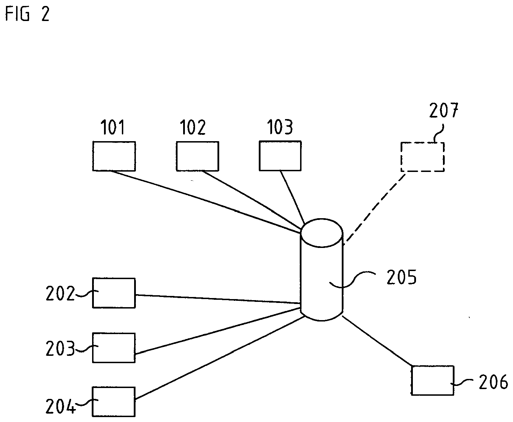

Fig. 2 shows an exemplary architecture of the information display system of fig. 1 in use with a scheduling system. The display devices 101-103 are connected to a computer network 201, which can be a computer network of any suitable wired or wireless kind such as, e.g. a network of any of the IEEE 802.x(x) standards.

Fig. 2 further discloses user computers 202-204, by means of which users of the scheduling system can check availability of any of the meeting rooms 101-103, make reservations, update reservations or delete an existing reservation. According to the exemplary embodiment, the user accomplishes the reservations, deletions, etc. by using a conventional calendar system, such as Microsoft Outlook/Exchange or IBM/Lotus Notes/Domino calendar systems or any other suitable calendar system.

Consequently, the user performs a meeting room reservation in exactly the same manner as is often used today, i.e. by means of an existing e-mail/calendar client in the user computer 202-204, and hence scheduling systems of this kind does not require installation of additional software on the user computers 202-204. The e-mail/calendar clients in the user computers 202-204 communicates with a scheduling server 205, such as a Microsoft Exchange Server or IBM/Lotus Domino Server, via the computer network 201 in a conventional manner.

The display devices of the information display system are consequently connected to an existing scheduling server solution, and provide an additional interface which can be used to facilitate overview of existing reservations not only at a user computer, but also e.g. at the actual location of the resource.

Information display systems of the disclosed kind are oftentimes of a kind where the scheduling server of the scheduling system must be adapted for communication with the display devices in order to allow communication between the display device and the scheduling server. For example, this can be accomplished by installing a web server service or other suitable service in the physical server containing the scheduling server. The web server/other service can then act as an interface to the scheduling server software, and communicate "internally" with the scheduling server using an internal scheduling server protocol, whereas the web server handles communication with the display device(s) which then comprises suitable programming for communication with the web server.

As mentioned above, solutions of this kind, however, are often are met with reluctance among system administrators responsible for the scheduling server, mainly due to the fact that the scheduling server in general constitutes a critical part of company business and therefore system administrators are very reluctant to any changes with regard to the software architecture of the scheduling server, and in particular to the installation of third party software that may or may not increase the risk of server faults.

A solution to the problem of undesired software installations on the scheduling server is provided by the International application WO 2010/151211 A1, "METHOD AND SYSTEM FOR DISPLAYING SCHEDULING INFORMATION". This document discloses solutions where the scheduling server is left untouched with regard to architecture/additional software, and where the only requirement is, similar to calendar resources in general, that a user account is set up for the particular resource (represented by the display device), and hence no undesired alterations of the scheduling server are required.

Consequently, the only requirement that this information display system imposes on administrators of the scheduling server of the scheduling system is to set up a user account for the resource in a manner that the system administrators is used to do regularly, e.g. when setting up an account for a new employee or a new resource.

Instead of, as in the prior art, utilizing software installed on the scheduling server for the communication between display device and exchange server, the solutions in WO 2010/151211 A1 utilize a protocol that can be used for automatic authentication of two communicating parties and which can be utilized to communicate with the scheduling server without requiring any additional scheduling server software. In this way, the display device can be automatically authenticated by the scheduling server, so that communication between display device and scheduling server is allowed without the requirement of additional software on the scheduling server.

For example, with regard to Microsoft Exchange Servers, the protocol called Web-based Distributed Authoring and Versioning (WebDAV) can be utilized, and which can be used to access the Exchange server by applications being located outside the physical server on which the Exchange server software is installed. Instead of WebDAV other protocols that are already present in the scheduling server can be used, e.g., Exchange Web Services (EWS) for at least some Microsoft Exchange versions as long as no additional scheduling server installations are required. Similar protocols exist for other kinds of scheduling servers, and the solution disclosed in WO 2010/151211 A1 is applicable in any scheduling server environment in which a communication protocol fulfilling the set requirements can be used.

The additional functionality that is required can be contained in the display device, i.e. all functional algorithms that handle information exchange between the scheduling server and the display device, and the disclosed solution provides for an information display system that is easy to install with minimum impact on the existing scheduling system. Further particulars of the solutions are thoroughly described in WO 2010/151211 A1.

The present invention will be described with reference to a system of the kind disclosed in WO 2010/151211 A1, but can also be implemented e.g. in conventional systems where installations on the scheduling servers are required. The present invention is, however, particularly useful in information display systems where installations on the scheduling servers in scheduling systems are not required, since the present invention provides a method for communicating further data between e.g. a display device and another entity without requiring any installations/alterations on the scheduling server. As will be explained below, the present invention provides the advantages of WO 2010/151211 also without use of protocols for automatic authentication by the use of e-mail messages instead.

It has been realized that in information display systems, system performance could be further enhanced if additional information is available. Until now this has not been possible without installations on the scheduling server, but the present invention provides a method for transmitting information to and/or from the display devices of the information display system without the requirement of further installations on the scheduling server of the scheduling system.

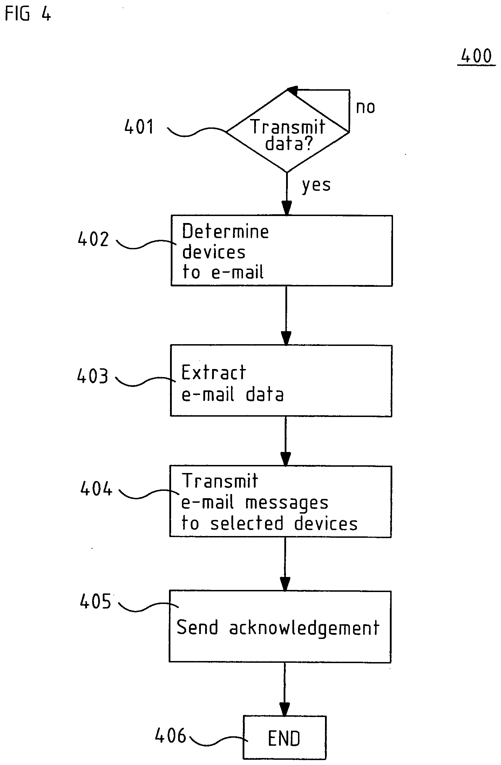

An exemplary method 400 for accomplishing this is disclosed in fig. 4 and discussed in the following. The exemplary method regards transmission of data/information to one or more of the display devices. Apart from the above described entities, the information display system in fig. 2 further comprises a second entity in the form of a system administration tool 206, which can be installed on any suitable computer in the network, e.g. on a separate stand alone computer, or on any suitable of the user computers 202-204. In addition other devices can be used as explained below.

In step 401 it is determined whether data/information is to be transmitted to one or more of the display devices 101-103. This can be determined e.g. by a display system administrator from the administration tool 206. If data is to be transmitted, the method continues, e.g. by the administrator selecting a suitable option in the administrative tool. Information display systems of the disclosed kind can comprise a large number of display devices. These display devices, in general, require an initial setup when being setup for use with a scheduling system. This can, for example, be accomplished on-site (i.e. at the premises of the resources where the display device is installed). Furthermore, in addition to this initial setup, the display devices can require updates at later situations. For example, if the display devices are capable of displaying scheduling information of other resources of the scheduling system than the resource that the display device is associated with, the already existing display devices may have to be updated, e.g. if a new resource that one or more of the other display devices are to be able to display scheduling information for, is added to the information display system so that the existing display device(s) will have knowledge of the added resource.

If the number of display devices in operation is relatively small, it is feasible for a system administrator to perform such updates of the display devices by physically visiting each of the display devices to perform the update, e.g. by means of a USB device. Similarly, e.g. software of the display device can be updated in this manner.

However, if the number of display devices is large, e.g. in the order 10, 20, 50 or 100 or more, such methods for updating the display devices are time consuming and hence undesirable. Still, the use of in particular information display systems where the display devices are automatically authenticated to the scheduling server of the scheduling system does not provide for any means for providing configuration data to the display device. If remote update is to be performed in such systems, additional software is inherently required, and drawbacks with installations on scheduling servers unavoidable.

According to the present invention these drawbacks are overcome by transmitting configuration data according to the above and/or other relevant data as discussed below by the use of electronic mail (e-mail). When display devices are to be updated, it is determined which display devices that are to be updated, step 402. For example, if an additional resource (display device) has been added to the system, indicated by dashed lines 207, data regarding this resource 207 can be added to one or more of the display devices 101-103 so as to allow e.g. reservations and/or checking availability of resource 207 from selected display devices 101-103. An information display system administrator can set different settings for different display devices in the system by means of the present invention. An e-mail message containing configuration information and/or a software update is then transmitted to the display devices that are to receive the data, in this example display devices 101-103, step 403.

For this reason the resources/display devices 101-103 are associated with an e-mail account, which is set up in a conventional manner in the scheduling server, and which in general is performed when setting up resources in scheduling servers and hence does not require any additional installation on the scheduling server. The e-mail message is consequently transmitted to the scheduling server, and the display devices 101-103 can be arranged to poll the scheduling server for possible new e-mail messages in a conventional manner at suitable intervals. The invention also has the advantage that if the resource that the display device is to be associated with is already provided with an e-mail address, all configuration of the system can be accomplished in the display device.

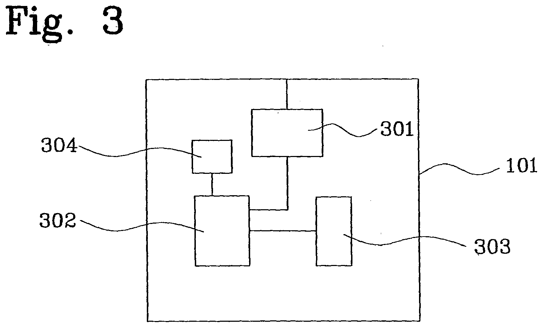

An exemplary display device 101 is schematically shown in Fig. 3. The display device 101 comprises a network interface 301 for allowing connection to a computer network, and a central processing unit 302 such as a Microprocessor or Micro controller for controlling the operation of the display device. The display of the display device can be of any suitable kind, e.g. a Liquid Crystal Display or a LED display.

The central processing unit 302 communicates with entities on the computer network via the network interface 301 and further controls data to be displayed on the display of the device 101, e.g. via a video display adapter 303. Operation of the display device 101 can, e.g. be controlled by software stored in a memory 304 connected to the central processing unit 302. This software is further arranged to be able to poll and read e-mail messages, and extract relevant data/software for performing an update of the data to be displayed and/or to update the software itself. The software of the display device can further be arranged to transmit e-mail messages comprising status or statistical information regarding display device and /or resource usage according to the below.

When a new e-mail message is received by the display device(s), the configuration data (in this example) is extracted from the e-mail message by the software in the display device, step 404, whereby the display can perform an automatic update so as to allow access to data regarding the resource 207. The receipt of the e-mail message can, in one embodiment, be arranged to be acknowledged, e.g. by return e-mail message, step 405, whereafter the method is ended in step 406.

The configuration data can be arranged in the e-mail message in any suitable way, and preferably be arranged to follow some syntax that allows extraction of the relevant data by the software of the display device. The e-mail message can, e.g., be in a text format, where the text follows some syntax that the display device reads in order to update the relevant data. For example, configuration data can be arranged to be included in the subject field of the e-mail message according to some suitable syntax. The data can also be arranged in both subject field and message field or only the message field. It is also possible to use optional fields in the e-mail message that in general are not used. The e-mail standard also provides a number of additional fields that can be used, and where different fields, for example, can be used for different data.

Alternatively, the configuration data can in the form of an e-mail message attachment in any suitable format, such as e.g. a text file format or in an executable file format that the display device can be arranged to execute upon reception. Consequently, the present invention allows configuration data to be transmitted to the display device without the requirement of any undesired alterations of the existing system. In fact, the entity from which the e-mail message is transmitted, such as, for example, the administration tool, need not even be installed in the internal network of e.g. the company/enterprise in which the display devices are installed. In principle, any device that is capable of sending e-mail messages can be provided with the functionality to send e-mail messages to the display devices. This makes administration of the information display system very advantageous, since administration can be performed without any impact on the internal enterprise network. This also makes it possible for e.g. the manufacturer of the display device to perform remote updates. If the administration tool is installed on a computer belonging to the internal network in which the display devices are installed, data can be extracted also from the scheduling server by means of the automatic authentication protocol. Furthermore, the communication via e-mail messages has the advantage that security can be kept at a high level.

According to one embodiment, the display devices accept e-mail messages from any sender, as long as the e-mail message is of a predefined format. Preferably the display device, when receiving an e-mail message, checks whether the e-mail message contains configuration information, and discards the received e-mail message otherwise. According to one embodiment the display device only accepts e-mail messages from specified sender or senders, and discards the e-mail messages otherwise, in order to reduce the risk of receipt of erroneous/hostile configuration information.

According to one embodiment the security is strengthen further by providing the display devices with an authentication key, such as a pre-shared authentication key. This authentication key can, e.g. be installed in the display device upon initial installation, i.e. when setting up the display for use in an information display system, or prior to such installation, e.g. at the manufacturing stage. If e-mail messages are to be transmitted only in the direction to the display device, it is sufficient that the display devices are provided with an authentication key that the administration tool or possible other sender utilizes to encrypt messages, so that the messages cannot be decrypted e.g. by display devices for which the configuration information is not intended, and so that messages that are not encrypted can be discarded. According to one embodiment two or more display devices in a system are provided with the same authentication key to allow the transmission of a single e-mail message to a plurality of receivers. According to another embodiment the entity transmitting e-mail messages to the display devices utilizes different authentication keys for different display devices.

As will be explained below, however, it can be advantageous also to transmit data from the display device to the administration tool. In this case the display device can be arranged to use the same authentication key to encrypt data for transmission from the display device to the administration tool, also by e-mail messages according to the below. The display devices can also be arranged to utilize individual authentication keys.

Consequently, according to one embodiment, the authentication keys are shared before installation, and the same key can also be used e.g. by display device and administration tool. If required the authentication key of the display device can be replaced by a new key by the use of an e-mail message from the administration tool containing both the old key and new key. The old key can then be used to authenticate the instructions to update security configuration, and where the new key replaces the old key for future messages.

It is also contemplated that the display device and/or administration tool can be provided with public/private key pairs, where the display device is provided with a private key before/at initial installation, and where the display device can be authenticated e.g. towards the administration tool by signing e-mail messages using the public key of this key pair, and where e-mail messages can be encrypted using the public key to only be decrypted by the private key as is known per se, and vice versa.

Preferably all transmitted data is encrypted to protect sensitive data, and the messages can, e.g. be checksum matched and/or signed, in dependence of the system used, to prevent manipulation of messages.

According to the above embodiments, the display device can be provided with an e-mail address belonging to the scheduling server. However, according to one embodiment, the display device is instead, or in addition, provided with an e-mail address of some suitable external entity, such as any existing e-mail service provider, or an e-mail address belonging e.g. to the manufacturer or retailer or service company, in which case the display device can be arranged to poll this external e-mail entity.

The e-mail messages can be generated from the administration tool, which according to the above can be located within or outside the network in which the display device is arranged, and e.g. be user initiated, e.g. by a system administrator, when configuration information or software is to be updated.

The e-mail communication can, however, also be automatic and comprise further/other information than configuration information. With regard to scheduling systems of e.g. the above kind, the use of display devices can significantly improve resource usage. However, the resource usage can be subject to analysis to further improve the usage.

According to one embodiment, e-mail messages are also used to communicate the scheduling information between the scheduling system and the display device(s). Consequently, all communication with the display device, i.e. also all communication between display device and scheduling system, can be accomplished by means of e-mail messages. In this embodiment, reservations etc. are transmitted as e-mail messages, following some suitable syntax, and where the display device can be arranged to poll e-mail messages at some suitable interval such as every 15s, 30s, 60s, or any suitable number of seconds or other time period etc. to retrieve possible new scheduling data. Similarly, data transmitted from the display device to the scheduling system, such as reservations made using the display device, etc. can also be transmitted by e-mail messages. According to this embodiment, consequently, the advantages of using a protocol with automatic authentication can be obtained also without the use of such a protocol.

It has been realized that it can be beneficial to obtain statistical information regarding resource usage, e.g. to determine whether a resource is used and to which extent, or whether a resource is constantly booked and thereby indicating the need for further resources. Also, it is of interest to know the extent to which a reservation is actually used. For this reason the display devices can be arranged to transmit e-mail messages at regular intervals containing usage information. That is, the display device can send information in regard of e.g. the usage of the resource and the extent to which a booked resource has actually been used.

For example, the display device can be arranged to store information regarding the time at which a meeting was scheduled to commence, and the time at which a reservation was actually taken into use, and if a booked resource was actually taken into use. Further, the display device can store the time that e.g. a meeting ended, the length of a reservation, number of participants in the reservation, type of meeting, such as regularly occurring or one-time reservation etc. A reservation can be arranged to be automatically cancelled if a certain time period, e.g. 10 or 15 or 30 minutes, has lapsed since the meeting was to commence and it has not been confirmed that the meeting actually has started, and such data can also be transmitted. The confirmation can, for example, be carried out e.g. by a user pressing/touching an appropriate indication on the display, or automatically by means of suitable input, e.g. from a light and/or motion sensor in the room.

These e-mail messages, which e.g. can be transmitted once a day, once a week or at any other suitable intervals, can be transmitted to the administration tool, which can use the received data to perform statistical analysis of the usage of the resource, which can then be used to improve resource usage. Similar to configuration data the statistical data can be can be arranged in the e-mail according to any suitable syntax, such as included in the subject field, and/or message field and/or any other suitable filed or as an attachment.

The use of statistics collected by the display device enables a more thorough analysis of resource usage that otherwise would be possible. Use of a protocol supporting automatic authentication according to the above makes retrieval of some information from the scheduling server possible, but not to the same extent as the present invention. For example, kind of resource, identity of user performing the reservation, participants and type of meeting can be retrieved from the scheduling server, provided that the administration tool is installed inside the network of the scheduling server. On the other hand, for example, only scheduled start/end times can be retrieved from the scheduling server, and not both the reserved start/end points and actual start/end times as is possible by the use of the present invention. Consequently, the use of e-mail messages according to the present invention makes further analysis possible, and also allows that the administration tool can be installed anywhere and not only in the same network as the display devices.

The display devices can also be arranged to e-mail status information, so that faulty devices can be detected by means of the administration tool in a straight forward manner. For example, the display devices can be arranged to transmit status information at any suitable intervals. The status can e.g. be indicated in the subject field or message body or any suitable field of the e-mail message.

In general, configuration data can be arranged to use one field, scheduling data can be arranged to use another field, statistical data a further field, and status information yet a further field, but different or all kinds of data can also be arranged to be transmitted in a same field.

The invention also has the advantage that the system is "passive", i.e. an e-mail message is transmitted, which preferably is then acknowledged by the transmission in return.

The invention furthermore has the advantage that embodiments where an intermediate server is arranged for communication with the scheduling server and the display devices communicates with the intermediate server instead of scheduling server, such as e.g. described in detail in WO 2010/151211 A1 referred to above, are no longer necessary, since the use of such intermediate servers can be completely omitted by the use of the present invention. It is to be noted, however, that the present invention is applicable also in systems comprising an intermediate server.

Finally, the information display system claimed below may in addition include any one or more from the following features.

For example, the data that the display device and the second entity are adapted to exchange by means of electronic mail messages may be one or more of configuration data and software for installation in the display device.

Also, the e-mail messages may comprise one or more of status information data regarding status of said display device, and information data regarding use of resources.

The second entity may be adapted for use in the same network as the scheduling server, and/or a network outside the network of said scheduling server.

The display device may be adapted to, in use, be associated with a resource for which scheduling information is to be displayed, and to receive scheduling information in regard of said resource from a scheduling server. The display device may comprise communication means for communication with the scheduling server by means of a communication protocol by means of which communication protocol the display device can be automatically authenticated by said scheduling server, so as to allow communication of scheduling information between said display device and the scheduling server independent of installation of additional software on the scheduling server. The second entity may further be adapted for, in use, communication with the scheduling server using said communication protocol.

The display device and/or second entity may adapted to be provided with a private key and a public key, said public key being such that encryption of e-mail messages by means of said public key can be decrypted by said private key.

The display device may include means for, in use with said scheduling system, receiving and displaying scheduling information in regard of one or more resources.

The information display system may further be is adapted to include a plurality of display devices.

## Claims

1. An information display system for displaying scheduling information in regard of at least one resource in a scheduling system, said scheduling system comprising a scheduling server and wherein scheduling of said resource is controlled by said scheduling server, said information display system comprising at least one display device adapted to be, in use, associated with a first resource of said scheduling system for displaying scheduling information with regard to said first resource, said display device including means for, in use with a scheduling system, receiving and displaying scheduling information, said information display system further including a second entity, being different from said display device, **characterized in that** said display device and said second entity are adapted for exchanging data between said display device and said second entity by means of electronic mail (e-mail) messages.

2. An information display system according to claim 1, **characterized in that** that said display device is adapted to, in use, receive data by means of e-mail messages transmitted by said second entity.

3. An information display system according to any of claims 1-2, **characterized in that** that said display device is adapted to, in use, transmit e-mail messages to said second entity, said e-mail messages containing data.

4. An information display system according to any of claims 1-3, **characterized in that**, in use, the e-mail address of said display device for use in transmission of said e-mail messages is an e-mail address of a resource that said display device is associated with.

5. An information display system according to any of claims 1-4, **characterized in that**, in use, the e-mail address of said display device for use in transmission of said e-mail messages is an e-mail address specific to said display device, and being an e-mail address of an entity being different from said scheduling server.

6. An information display system according to any of claims 1-5, **characterized in that** said second entity is adapted to, in use, receive usage information regarding usage of the one or more resources that said display device is associated with by means of e-mail messages.

7. An information display system according to any of the claims 1-6, **characterized in that** said second entity is adapted to be an entity being located separate from said scheduling server.

8. An information display system according to any of the claims 1-7, **characterized in that** said display device is adapted to, in use, be associated with a resource for which scheduling information is to be displayed, and to receive scheduling information in regard of said resource from a scheduling server.

9. An information display system according to claim 8, **characterized in that** said display devices comprises communication means for communication with said scheduling server by means of a communication protocol by means of which communication protocol the display device can be automatically authenticated by said scheduling server, so as to allow communication of scheduling information between said display device and the scheduling server independent of installation of additional software on the scheduling server.

10. An information display system according to any of the claims 1-9, **characterized in that** said display device and/or said second entity is adapted to be provided with an authentication key, and wherein, in said communication, e-mail messages are encrypted by means of said authentication key.

11. Information display system according to any of the claims 1-10, **characterized in that** said display device is adapted for, in use, obtaining scheduling information directly from said scheduling server.

12. Information display system according to any of the claims 1-11, **characterized in that** the display device is adapted to receive and/or transmit scheduling information from/to said scheduling system by means of e-mail messages.

13. A display device for use in an information display system according to any one of the claims 1-12, said display device being adapted to be, in use, associated with a first resource of said scheduling system for displaying scheduling information with regard to said first resource, said display device including means for, in use with a scheduling system, receiving and displaying scheduling information, **characterized in that** said display device is adapted for, in use, exchanging data with said scheduling system and/or a second entity of said information display system by means of electronic mail (e-mail) messages.

14. A method for communication in an information display system displaying scheduling information in regard of at least one resource in a scheduling system, said scheduling system comprising a scheduling server and wherein scheduling of said resource is controlled by said scheduling server, said information display system comprising at least one display device adapted to be, in use, associated with a first resource of said scheduling system for displaying scheduling information with regard to said first resource, said display device including means for, in use with a scheduling system, receiving and displaying scheduling information, said information display system further including a second entity, being different from said display device, **characterized in that** the method comprises:
- exchanging data between said display device and said second entity by means of electronic mail (e-mail) messages.

15. Computer program product, **characterised in** code means, which when run in a processing unit of a computer causes the control unit to execute the method according to claim 14, wherein the code means are included in a computer readable medium.

## Patentansprüche

1. Informationsanzeigesystem zum Anzeigen von Planungsinformationen bezüglich mindestens einer Ressource in einem Planungssystem, wobei das Planungssystem einen Planungsserver umfasst und wobei das Planen der Ressource durch den Planungsserver gesteuert wird, wobei das Informationsanzeigesystem mindestens eine Anzeigeeinrichtung umfasst, die dafür ausgelegt ist, bei Verwendung mit einer ersten Ressource des Planungssystems assoziiert zu sein zum Anzeigen von Planungsinformationen bezüglich der ersten Ressource, wobei die Anzeigeeinrichtung Mittel enthält, um bei Verwendung mit einem Planungssystem Planungsinformationen zu empfangen und anzuzeigen, wobei das Informationsanzeigesystem weiterhin eine zweite Entität enthält, die von der Anzeigeeinrichtung verschieden ist, **dadurch gekennzeichnet, dass** die Anzeigeeinrichtung und die zweite Entität ausgelegt sind zum Austauschen von Daten zwischen der Anzeigeeinrichtung und der zweiten Entität mit Hilfe von Elektronische-Post(E-Mail)-Nachrichten.

2. Informationsanzeigesystem nach Anspruch 1, **dadurch gekennzeichnet, dass** die Anzeigeeinrichtung ausgelegt ist, um bei Verwendung Daten mit Hilfe von E-Mail-Nachrichten zu empfangen, die durch die zweite Entität übertragen werden.

3. Informationsanzeigesystem nach einem der Ansprüche 1-2, **dadurch gekennzeichnet, dass** die Anzeigeeinrichtung ausgelegt ist, um bei Verwendung E-Mail-Nachrichten zu der zweiten Entität zu übertragen, wobei die E-Mail-Nachrichten Daten enthalten.

4. Informationsanzeigesystem nach einem der Ansprüche 1-3, **dadurch gekennzeichnet, dass** bei Verwendung die E-Mail-Adresse der Anzeigeeinrichtung zur Verwendung bei der Übertragung der E-Mail-Nachrichten eine E-Mail-Adresse einer Ressource ist, mit der die Anzeigeeinrichtung assoziiert ist.

5. Informationsanzeigesystem nach einem der Ansprüche 1-4, **dadurch gekennzeichnet, dass** bei Verwendung die E-Mail-Adresse der Anzeigeeinrichtung zur Verwendung bei der Übertragung der E-Mail-Nachrichten eine für die Anzeigeeinrichtung spezifische E-Mail-Adresse ist und eine E-Mail-Adresse einer Entität ist, die von dem Planungsserver verschieden ist.

6. Informationsanzeigesystem nach einem der Ansprüche 1-5, **dadurch gekennzeichnet, dass** die zweite Entität ausgelegt ist, um bei Verwendung Nutzungsinformationen bezüglich der Nutzung der einen oder mehreren Ressourcen zu empfangen, mit denen die Anzeigeeinrichtung mit Hilfe von E-Mail-Nachrichten assoziiert ist.

7. Informationsanzeigesystem nach einem der Ansprüche 1-6, **dadurch gekennzeichnet, dass** die zweite Entität dafür ausgelegt ist, eine Entität zu sein, die separat von dem Planungsserver angeordnet ist.

8. Informationsanzeigesystem nach einem der Ansprüche 1-7, **dadurch gekennzeichnet, dass** die Anzeigeeinrichtung dafür ausgelegt ist, bei Verwendung mit einer Ressource assoziiert zu sein, für die Planungsinformationen angezeigt werden sollen, und zum Empfangen von Planungsinformationen bezüglich der Ressource von einem Planungsserver.

9. Informationsanzeigesystem nach Anspruch 8, **dadurch gekennzeichnet, dass** die Anzeigeeinrichtung Kommunikationsmittel zur Kommunikation mit dem Planungsserver mit Hilfe eines Kommunikationsprotokolls umfasst, wobei mit Hilfe des Kommunikationsprotokolls die Anzeigeeinrichtung automatisch durch den Planungsserver authentisiert werden kann, um Kommunikation von Planungsinformationen zwischen der Anzeigeeinrichtung und dem Planungsserver unabhängig von einer Installation von zusätzlicher Software auf dem Planungsserver zu gestatten.

10. Informationsanzeigesystem nach einem der Ansprüche 1-9, **dadurch gekennzeichnet, dass** die Anzeigeeinrichtung und/oder die zweite Entität ausgelegt ist zum Ausgestattetwerden mit einem Authentisierungsschlüssel und wobei in der Kommunikation E-Mail-Nachrichten mit Hilfe des Authentisierungsschlüssels verschlüsselt werden.

11. Informationsanzeigesystem nach einem der Ansprüche 1-10, **dadurch gekennzeichnet, dass** die Anzeigeeinrichtung dafür ausgelegt ist, bei Verwendung Planungsinformationen direkt von dem Planungsserver zu erhalten.

12. Informationsanzeigesystem nach einem der Ansprüche 1-11, **dadurch gekennzeichnet, dass** die Anzeigeeinrichtung ausgelegt ist zum Empfangen und/oder Übertragen von Planungsinformationen von/zu dem Planungssystem mit Hilfe von E-Mail-Nachrichten.

13. Anzeigeeinrichtung zur Verwendung in einem Informationsanzeigesystem nach einem der Ansprüche 1-12, wobei die Anzeigeeinrichtung dafür ausgelegt ist, bei Verwendung mit einer ersten Ressource des Planungssystems assoziiert zu sein zum Anzeigen von Planungsinformationen bezüglich der ersten Ressource, wobei die Anzeigeeinrichtung Mittel enthält, um bei Verwendung mit einem Planungssystem Planungsinformationen zu empfangen und anzuzeigen, **dadurch gekennzeichnet, dass** die Anzeigeeinrichtung dafür ausgelegt ist, bei Verwendung Daten mit dem Planungssystem und/oder einer zweiten Entität des Informationsanzeigesystems mit Hilfe von Elektronische-Post(E-Mail)-Nachrichten auszutauschen.

14. Verfahren zum Kommunizieren in einem Informationsanzeigesystem, das Planungsinformationen bezüglich mindestens einer Ressource in einem Planungssystem anzeigt, wobei das Planungssystem einen Planungsserver umfasst und wobei das Planen der Ressource durch den Planungsserver gesteuert wird, wobei das Informationsanzeigesystem mindestens eine Anzeigeeinrichtung umfasst, die dafür ausgelegt ist, bei Verwendung mit einer ersten Ressource des Planungssystems assoziiert zu sein zum Anzeigen von Planungsinformationen bezüglich der ersten Ressource, wobei die Anzeigeeinrichtung Mittel enthält, um bei Verwendung mit einem Planungssystem Planungsinformationen zu empfangen und anzuzeigen, wobei das Informationsanzeigesystem weiterhin eine zweite Entität enthält, die von der Anzeigeeinrichtung verschieden ist, **dadurch gekennzeichnet, dass** das Verfahren umfasst:
- Austauschen von Daten zwischen der Anzeigeeinrichtung und der zweiten Entität mit Hilfe von Elektronische-Post(E-Mail)-Nachrichten.

15. Computerprogrammprodukt, **gekennzeichnet durch** Codemittel, das bei Abarbeiten in einer Verarbeitungseinheit eines Computers bewirkt, dass die Steuereinheit das Verfahren nach Anspruch 14 ausführt, wobei die Codemittel in einem computerlesbaren Medium enthalten sind.

## Revendications

1. Système d'affichage d'informations pour afficher des informations de planification concernant au moins une ressource dans un système de planification, ledit système de planification comprenant un serveur de planification, et la planification de ladite ressource étant commandée par ledit serveur de planification, ledit système d'affichage d'informations comprenant au moins un dispositif d'affichage adapté pour être, lors de l'utilisation, associé à une première ressource dudit système de planification pour afficher des informations de planification concernant ladite première ressource, ledit dispositif d'affichage comprenant des moyens pour, lors de l'utilisation avec un système de planification, recevoir et afficher des informations de planification, ledit système d'affichage d'informations comprenant en outre une seconde entité, différente dudit dispositif d'affichage, **caractérisé en ce que** ledit dispositif d'affichage et ladite seconde entité sont adaptés pour échanger des données entre ledit dispositif d'affichage et ladite seconde entité au moyen de messages de courrier électronique (courriels).

2. Système d'affichage d'informations selon la revendication 1, **caractérisé en ce que** ledit dispositif d'affichage est adapté pour, lors de l'utilisation, recevoir des données au moyen de messages de courrier électronique transmis par ladite seconde entité.

3. Système d'affichage d'informations selon l'une quelconque des revendications 1 à 2, **caractérisé en ce que** ledit dispositif d'affichage est adapté pour, lors de l'utilisation, transmettre des messages de courrier électronique à ladite seconde entité, lesdits messages de courrier électronique contenant des données.

4. Système d'affichage d'informations selon l'une quelconque des revendications 1 à 3, **caractérisé en ce que**, lors de l'utilisation, l'adresse de courrier électronique dudit dispositif d'affichage destinée à être utilisée dans la transmission desdits messages de courrier électronique est une adresse de courrier électronique d'une ressource avec laquelle ledit dispositif d'affichage est associé.

5. Système d'affichage d'informations selon l'une quelconque des revendications 1 à 4, **caractérisé en ce que**, lors de l'utilisation, l'adresse de courrier électronique dudit dispositif d'affichage destinée à être utilisée dans la transmission desdits messages de courrier électronique est une adresse de courrier électronique spécifique audit dispositif d'affichage, et est une adresse de courrier électronique d'une entité différente dudit serveur de planification.

6. Système d'affichage d'informations selon l'une quelconque des revendications 1 à 5, **caractérisé en ce que** ladite seconde entité est adaptée pour, lors de l'utilisation, recevoir des informations d'utilisation concernant l'utilisation de la ou des ressources avec lesquelles ledit dispositif d'affichage est associé au moyen de messages de courrier électronique.

7. Système d'affichage d'informations selon l'une quelconque des revendications 1 à 6, **caractérisé en ce que** ladite seconde entité est adaptée pour être une entité qui est située séparément dudit serveur de planification.

8. Système d'affichage d'informations selon l'une quelconque des revendications 1 à 7, **caractérisé en ce que** ledit dispositif d'affichage est adapté pour, lors de l'utilisation, être associé à une ressource pour laquelle des informations de planification doivent être affichées, et pour recevoir des informations de planification concernant ladite ressource à partir d'un serveur de planification.

9. Système d'affichage d'informations selon la revendication 8, **caractérisé en ce que** lesdits dispositifs d'affichage comprennent des moyens de communication pour une communication avec ledit serveur de planification au moyen d'un protocole de communication au moyen duquel le dispositif d'affichage peut être authentifié automatiquement par ledit serveur de planification, de manière à permettre la communication d'informations de planification entre ledit dispositif d'affichage et le serveur de planification indépendamment de l'installation d'un logiciel supplémentaire sur le serveur de planification.

10. Système d'affichage d'informations selon l'une quelconque des revendications 1 à 9, **caractérisé en ce que** ledit dispositif d'affichage et/ou ladite seconde entité sont adaptés à être pourvus d'une clé d'authentification, et dans lequel, dans ladite communication, des messages de courrier électronique sont chiffrés au moyen de ladite clé d'authentification.

11. Système d'affichage d'informations selon l'une quelconque des revendications 1 à 10, **caractérisé en ce que** ledit dispositif d'affichage est adapté pour, lors de l'utilisation, obtenir des informations de planification directement à partir dudit serveur de planification.

12. Système d'affichage d'informations selon l'une quelconque des revendications 1 à 11, **caractérisé en ce que** le dispositif d'affichage est adapté pour recevoir et/ou transmettre des informations de planification depuis/vers ledit système de planification au moyen de messages de courrier électronique.

13. Dispositif d'affichage destiné à être utilisé dans un système d'affichage d'informations selon l'une quelconque des revendications 1 à 12, ledit dispositif d'affichage étant adapté pour être, lors de l'utilisation, associé à une première ressource dudit système de planification pour afficher des informations de planification concernant ladite première ressource, ledit dispositif d'affichage comprenant des moyens pour, lors de l'utilisation avec un système de planification, recevoir et afficher des informations de planification,
**caractérisé en ce que** ledit dispositif d'affichage est adapté pour, lors de l'utilisation, échanger des données avec ledit système de planification et/ou une seconde entité dudit système d'affichage d'informations au moyen de messages de courrier électronique (courriels).

14. Procédé de communication dans un système d'affichage d'informations affichant des informations de planification concernant au moins une ressource dans un système de planification, ledit système de planification comprenant un serveur de planification et la planification de ladite ressource étant commandée par ledit serveur de planification, ledit système d'affichage d'informations comprenant au moins un dispositif d'affichage adapté pour être, lors de l'utilisation, associé à une première ressource dudit système de planification pour afficher des informations de planification concernant ladite première ressource, ledit dispositif d'affichage comprenant des moyens pour, lors de l'utilisation avec un système de planification, recevoir et afficher des informations de planification, ledit système d'affichage d'informations comprenant en outre une seconde entité, étant différente dudit dispositif d'affichage, **caractérisé en ce que** le procédé comprend :
- l'échange de données entre ledit dispositif d'affichage et ladite seconde entité au moyen de messages de courrier électronique (courriels).

15. Produit de programme d'ordinateur, **caractérisé par** des moyens de code, qui, lorsqu'ils sont exécutés dans une unité de traitement d'un ordinateur, amènent l'unité de commande à exécuter le procédé selon la revendication 14, les moyens de code étant inclus dans un support lisible par ordinateur.
